# EUROPÄISCHE PATENTSCHRIFT

(11) **EP 1 480 283 B1**
(45) Veröffentlichungstag und Bekanntmachung des Hinweises auf die Patenterteilung: **24.08.2005**
(21) Anmeldenummer: 04011897.8
(22) Anmeldetag: 19.05.2004
(51) Int. Cl.: H01M 2/10

(54) **Batteriekasten**
Battery case
Caisse de batterie

(30) Priorität: 21.05.2003 DE 10323024
(43) Veröffentlichungstag der Anmeldung: 24.11.2004
(73) Patentinhaber: VB Autobatterie GmbH & Co. KGaA, 30419 Hannover (DE)
(72) Erfinder: Pietzekatis, Karl-Heinz, 31515 Wunstorf (DE); Streuer, Peter, 30559 Hannover (DE)
(74) Vertreter: Gerstein, Hans Joachim

(56) Entgegenhaltungen:
- WO-A-01/41236
- DE-B- 2 950 629
- DE-U- 7 135 447
- DE-U- 7 538 942
- DE-U- 8 805 405
- FR-A- 2 556 136
- FR-A- 2 565 411

## Beschreibung

Die Erfindung betrifft einen Batteriekasten mit einer Durchführungsöffnung an einem Flansch des Batteriekastens zur Aufnahme eines Tragegriffelementes, das einen länglichen Griffabschnitt hat, der größer als die Durchführungsöffnung ist, und einen an die Enden des Griffabschnitts angebrachten eine Schlaufe bildenden Schnurabschnitt hat.

Zur Handhabung von Batterien, insbesondere von Autobatterien, sind Tragegriffe bekannt, die beispielsweise als Kunststoffformteile klappbar an den Batteriedekkel angeklemmt werden. Derartige Klappgriffe sind beispielsweise aus der EP 1 164 647 A2 bekannt.

In der DE 29 50 629 C2 ist eine Griffschnur für einen Batteriekasten beschrieben, die durch zwei voneinander beabstandete Durchgangslöcher in einem Flansch des Batteriekastens gefädelt wird. Der Flansch ist jeweils integral an den Grundkasten des Batteriekastens angeformt und wird durch den Batteriedeckel übergriffen. Das Einfädeln der Batteriekastenschnur durch die Durchgangslöcher ist relativ zeitaufwendig und arbeitsintensiv. Zudem ist ein Verriegelungselement für die Batteriekastenschnur erforderlich, das relativ hohen Belastungen standhalten muss.

Bei der automatischen Montage von Fahrzeugbatterien mit Robotern werden diese nämlich an den Batteriekastenschnüren durch die Roboterarme gegriffen und an die Einbauposition verfahren. Hierbei treten Beschleunigungen bis zu 6 G auf.

In dem deutschen Gebrauchsmuster G 88 05 405.5 U1 ist ein Griff für Batteriekästen offenbart, in dem Arretierungskammern für die Endstücke der Batteriekastenschnur eingebracht sind. Nach dem Durchfädeln der Batteriekastenschnur durch die Durchgangslöcher im Flansch des Batteriekastens werden die Enden der Batteriekastenschnur dann durch Einklemmen der Endstücke in die Arretierungskammer mit dem Griffstück verbunden.

Wiederum ist das Durchfädeln der Batteriekastenschnur durch die Durchgangslöcher und das anschließende Einklemmen der Endstücke in die Arretierungskammer arbeitsintensiv.

In der DE 35 33 580 C2 ist eine Tragevorrichtung für einen Akkumulator offenbart, der am Akkumulator herausziehbar angebrachte Traggriffe hat, die durch an gegenüberliegenden Seiten des Akkumulators vorgesehene Führungsschlitze hindurchsteckbar und in der Tragstellung bei herausgezogenem Griff gehalten sind. Der Griff ist als rechteckförmiger Rahmen aus Kunststoff ausgebildet, der in einer Leiste mit einem Führungsschlitz geführt wird. Am unteren waagerechten Rahmenabschnitts sind Vorsprünge vorgesehen, und bei herausgezogenem Griff an der Unterkante der Leiste anschlagen. In der DE 7135447 U ist ein Akkumulator mit einem an einer Griffleiste befestigtem Kunststoff-Kordelgriff beschrieben, der in Durchführungslöchern und geschlitzten Einknöpfungslöchern einer Griffleiste mit Rippen aufgenommen wird.

In der FR 2 565 411 ist eine Tragekordel mit einer Verriegelungshülse an der Tragekordel beschrieben. Nach Einfädeln der Tragekordel durch Durchführungsöffnungen am Flansch des Batteriekastens wird dieser mit den Verriegelungselementen geschlossen.

In der WO 01/41 236 A1 ist ein Tragegriff für eine Batterieschnur mit einer Einfädelungsöffnung beschrieben. Die Batterieschnur muss durch zwei Bohrungen in einem Tragsteg am Batteriekasten hindurchgefädelt werden. Anschließend wird sie am Verriegelungselement am Tragegriff gesichert, so dass Batterieschnur und Tragegriff geschlossen sind.

Aufgabe der Erfindung ist es daher, einen verbesserten Batteriekasten zu schaffen, an den mit geringen Montageaufwand Tragegriffelemente montiert werden können, die zudem stark belastbar sind.

Die Aufgabe wird bei einem gattungsgemäßen Batteriekasten erfindungsgemäß dadurch gelöst, dass die Durchführungsöffnung als ein sich in eine Längsrichtung erstreckendes Langloch ausgebildet ist, durch das die Schlaufe des Schnurabschnitts des Tagegriffelementes durchführbar ist. An dem Batteriekasten unterhalb der Öffnung des Langlochs im Bereich der Langlochenden ist jeweils ein Klemmverriegelungselement zur Aufnahme des Schnurabschnitts angeordnet. Die Klemmverriegelungselemente haben jeweils eine Einführungsöffnung, die in eine Führungsöffnung für den Schnurabschnitt mündet und gegenüberliegend der Führungsöffnung eine zur Einführung des Schnurabschnitts offene Einführseite und eine Verengung zur verriegelnden Aufnahme des Schnurabschnitts in der angrenzenden Führungsöffnung hat. Die offene Einführseite weist in Längsrichtung parallel zum Langloch gesehen vom Langloch in Richtung des zugeordneten Langlochendes.

Das Langloch bildet somit eine Begrenzung für die Batteriekastenschnur nach außen durch die Langlochenden. Die Begrenzung bei der Führung der Batteriekastenschnur nach innen wird hingegen durch die von dem Langloch unabhängigen Klemmverriegelungselemente bewirkt, wobei die offene Einführseite in die Richtung des jeweils zugeordneten Langlochendes weist.

Damit kann die Schlaufe des Schnurabschnitts einer ringförmig geschlossenen Batteriekastenschnur mit Griffabschnitt und Schnurabschnitt leicht durch das Langloch geführt werden. Die Durchführung der Schlaufe durch ein Langloch ist wesentlich einfacher und schneller, als das Einfädeln von Batteriekastenschnurenden durch die herkömmlichen Durchgangslöcher, die lediglich einen etwa dem Durchmesser der Batteriekastenschnur entsprechenden Durchmesser haben. Die Schlaufe wird dann um die Klemmverriegelungselemente herum gelegt, so dass Schnurabschnitte im Bereich der offenen Einführseiten der Einführöffnung der Klemmverriegelungselemente liegen. Durch einfaches Hochziehen der Batteriekastenschnur, beispielsweise am Griffabschnitt, wird der Schnurabschnitt dann automatisch durch die Einführöffnung in die angrenzende Führungsöffnung hineingezogen und durch die Verengung der Einführöffnung in der Führungsöffnung gehalten.

Diese erfindungsgemäße Ausgestaltung des Batteriekastens hat den Vorteil, dass keine Verbindungselemente an der Batteriekastenschnur mehr erforderlich sind. Diese kann vielmehr einteilig geformt werden, so dass die Belastbarkeit wesentlich erhöht wird.

Es ist vorteilhaft, wenn die Verengung der Einführöffnung fluchtend mit dem zugeordneten Langlochende ausgerichtet ist. Dann wird der Schnurabschnitt von der Führungsöffnung des Klemmverriegelungselementes direkt nach oben zu dem darüberliegenden Langlochende geführt, so dass das Langlochende und die Führungsöffnung zusammen ein Durchgangsloch bilden.

Vorzugsweise ist ein integral mit dem Batteriekasten geformter Vorsprung vorgesehen, der sich quer zur Außenwand des Batteriekastens und parallel in Längsrichtung des Flansches erstreckt. Die Klemmverriegelungselemente sind dabei jeweils in den schmalen an den Batteriekasten angrenzenden Seiten des Vorsprungs geformt. Dies hat den Vorteil, dass die Batteriekastenschnur unterhalb des Vorsprungs aufliegen kann, wenn die Batteriekastenschnur mit dem Griffabschnitt nach oben gezogen wird.

Zur Erhöhung der Stabilität sind vorteilhafterweise Verstärkungsrippen quer zur Längsrichtung des Vorsprungs vorgesehen, die integral mit dem Vorsprung und dem Batteriekasten verbunden sind.

Weiterhin ist es vorteilhaft, wenn mindestens eine gegenüberliegend von der Behälterwand an der Unterseite des Vorsprungs angeordnete Nase vorgesehen ist, die in die vom Flansch zum Vorsprung laufende Richtung nach unten weist. Durch die Nase wird ein Abrutschen der Batteriekastenschnur von dem Vorsprung verhindert und erreicht, dass die Batteriekastenschnur auch bei extremer Belastung sicher in den Klemmverriegelungselementen sitzt.

Die Erfindung wird nachfolgend anhand der beigefügten Zeichnungen beispielhaft näher erläutert. Es zeigen:
- Fig. 1 -: Seitenansicht eines Ausschnitts eines erfindungsgemäßen Batteriekastens;
- Fig. 2a + 2b -: Ansichten von zwei Ausführungsformen einer Seitenwand des Batteriekastens aus Figur 1;
- Fig. 3 -: Draufsicht auf den Ausschnitt des Batteriekastens aus Figur 1 mit dem Langloch als Durchführungsöffnung;
- Fig. 4a+4b -: Ausschnittsansichten als Draufsicht auf den integral mit dem Batteriekasten geformten Vorsprung mit Klemmverriegelungselementen.

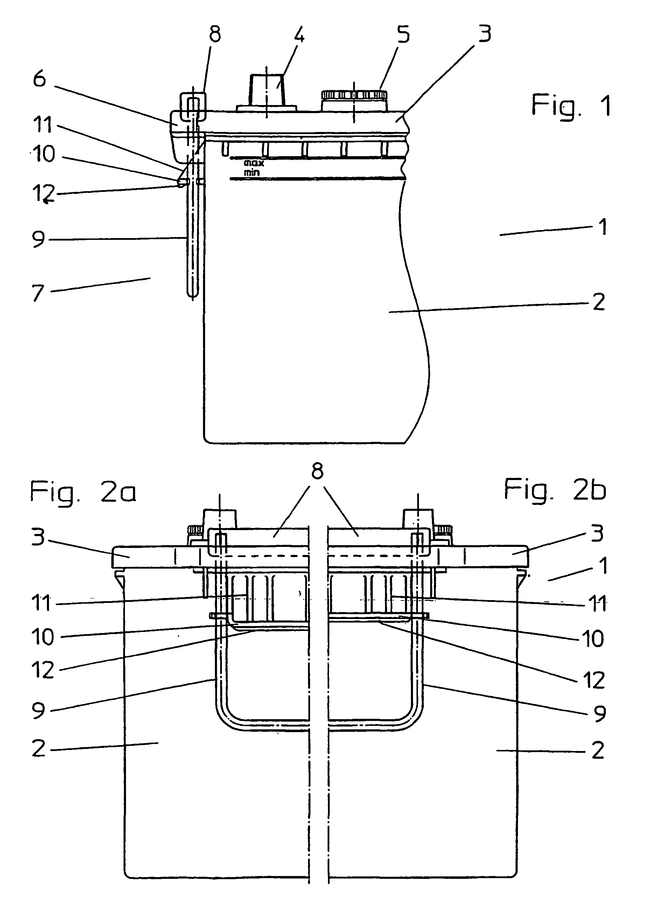

Die Figur 1 lässt eine Seitenansicht eines Ausschnitts einer Starterbatterie 1 für Kraftfahrzeuge erkennen, die in bekannter Weise einen Batteriekasten 2 mit einem den Batteriekasten 2 oben schließenden Deckel 3 hat. Durch den Deckel 3 sind die Pole 4 zum elektrischen Anschluss geführt und es sind Stopfen 5 zur Kontrolle des Wasser- und Säurestands und gegebenenfalls zum Nachfüllen von Wasser und/oder Säure vorgesehen.

An den Batteriekasten 2 ist ein Flansch 6 angeformt, der von dem Deckel 3 übergriffen wird. In dem Flansch 6 ist eine Durchführungsöffnung zur Aufnahme eines Tragegriffelementes 7 gebildet. Das Tragegriffelement 7 besteht hierbei aus einem länglichen Griffabschnitt 8 und einem daran anschließenden eine Schlaufe bildenden Schnurabschnitt 9. Der Griffabschnitt 8 und der Schnurabschnitt 9 sind vorzugsweise integral miteinander geformt, so dass das Tragegriffelement 7 sehr hohen Belastungen standhalten kann, insbesondere wenn die Starterbatterie 1 an dem Griffabschnitt 8 von einem Roboterarm erfasst und zur Einbauposition oder zu einem Lagerplatz hingeschleudert wird.

Die Durchführungsöffnung ist hierbei als Langloch ausgebildet, durch das die Schlaufe des Schnurabschnitts 9 von der Oberseite des Deckels 3 nach unten in Richtung des Bodens des Batteriekastens 2 gesteckt wird. Die Schlaufe des Schnurabschnitts 9 fällt dann, wie dargestellt, nach unten und wird zur Öffnung des Langlochs hin durch Klemmverriegelungselemente gehalten, die in einem Vorsprung 10 geformt sind. Der Vorsprung 10 erstreckt sich hierbei von der Außenwand des Batteriekastens 2 quer nach außen weg und wird durch Verstärkungsrippen 11 abgestützt, die integral mit der Oberseite des Vorsprungs 10 und der Außenwand des Batteriekastens 2 verbunden sind.

Der Vorsprung 10 hat weiterhin eine Nase 12 an der Unterseite des Vorsprungs 10 gegenüberliegend von der Außenwand des Batteriekastens 2. Die Nase 12 weist in die vom Flansch 6 zum Vorsprung 10 laufende Richtung nach unten und dient zur Gewährleistung eines sicheren Sitzes des Schnurabschnitts 12 in den Klemmverriegelungselementen.

Der Vorsprung 10 ist im Abstand von dem Flansch 6 unterhalb davon angeordnet. Dabei sind die Klemmverriegelungselemente in dem Vorsprung 10 so ausgerichtet, dass sie mit den zugeordneten Enden des Langlochs fluchten. Dies wird anhand der Figuren 2a und 2b deutlicher, die Aufsichten auf die in der Figur 1 als Seitenansicht gezeigte Seitenwand der Starterbatterie 1 zeigen.

Die Figuren 2a und 2b zeigen zwei Varianten, wobei die Figur 2b eine Grundvariante zeigt. Im Vergleich hierzu ist der Vorsprung 10 der in der Figur 2a dargestellten Ausführungsform nach unten verlegt, damit unterhalb der Einführungsöffnung 15 eine abgerundete Kontur geformt werden kann, die ein Abknicken der Batterieschnur in diesem Bereich verhindert.

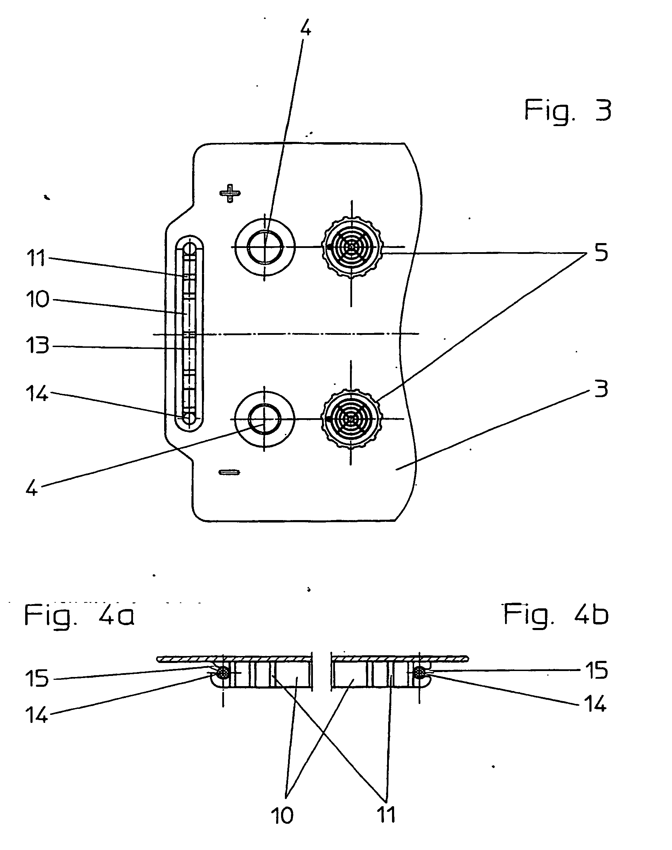

Die Figur 3 lässt eine Draufsicht auf die Starterbatterie 1 mit dem Deckel 3 erkennen. Es wird deutlich, dass in dem Flansch 6 ein sich parallel zur schmalen Seitenwand der Starterbatterie 1 in eine Längsrichtung erstreckendes Langloch 13 vorgesehen ist. Alternativ kann das Langloch aber auch an der längeren Seite der Starterbatterie 1 angeordnet sein.

Die Ausbildung der Durchführungsöffnung als Langloch 13 hat den Vorteil, dass die Schlaufe einer ringförmig geschlossenen Batteriekastenschnur leicht von oben von der Oberseite des Batteriedeckels 3 nach unten in Richtung Batteriekasten 2 gesteckt werden kann, ohne dass das Ende einer Batteriekastenschnur aufwendig durch die herkömmlichen zwei voneinander beabstandeten Durchgangslöcher gefädelt werden muss. Die Batteriekastenschnur kann auf diese Weise einteilig ausgeführt sein, sollte jedoch einen Griffabschnitt 8 haben, der größer als das Langloch 13 ist, um ein Durchrutschen der Batteriekastenschnur durch das Langloch 13 nach unten zu verhindern.

Aus der Figur 3 wird weiterhin deutlich, dass unterhalb des Langlochs 13 der sich parallel zum Langloch erstreckende Vorsprung 10 mit den Verstärkungsrippen 11 angeordnet ist. Fluchtend mit den Langlochenden sind in den schmalen, an den Batteriekasten 2 angrenzenden Seiten des Vorsprungs 10 Führungsöffnungen 14 zur Aufnahme des Schnurabschnitts 9 ausgebildet, beispielsweise in Form von Bohrungen. Die Batteriekastenschnur kann damit durch das Langloch 13 hindurch nach unten mit Hilfe der Führungsöffnungen 14 geführt werden, so dass die Führungsöffnungen 14 eine Begrenzung zur Batteriemittelachse A und die Langlochenden eine Begrenzung nach außen bilden.

Das Einfädeln des Schnurabschnitts 9 in die Führungsöffnung 14 wird durch Einführungsöffnungen 15 ermöglicht, die als Schlitz mit einer in Längsrichtung parallel zum Langloch 13 gesehen vom Langloch 13 in Richtung des zugeordneten Langlochendes weisenden offenen Einführseite ausgebildet ist. Die Einführöffnung 15 mündet in die angrenzende Führungsöffnung 14 und hat eine Verengung oder ist im Verhältnis zur Führungsöffnung 14 verengt ausgebildet, so dass der Schnurabschnitt 9 in der Führungsöffnung 14 verriegelt ist, wenn dieser durch die Einführöffnung 15 in die Führungsöffnung 14 eingeklemmt wird.

Die Figuren 4a und 4b zeigen zwei Ausführungsformen des integral mit dem Batteriekasten 2 geformten Vorsprungs 10 mit unterschiedlich ausgebildeten Klemmverriegelungselementen als Ausschnittsansichten als Draufsicht. Im Vergleich zu der in der Figur 4b dargestellten Variante mit parallel zur Seitenwand des Batteriekastens 2 verlaufenden Einführungsöffnung 15 weist der Verlauf der Einführungsöffnung 15 in der Variante des Vorsprungs 10, die in der Figur 4a gezeigt ist, schräg von der Seitenwand des Batteriekastens 2 weg. Dies ermöglicht eine leichtere maschinelle Montage der Batteriekastenschnur.

Die Montage des Tragegriffelementes 7 erfolgt durch Erfassen des Griffabschnitts 8 und Schieben des nach unten durchhängenden schlaufenförmigen Schnurabschnitts durch das Langloch 13. Die durch das Langloch 13 hindurchgeschobene Schlaufe des Schnurabschnitts 9 wird dann rechts und links vor die offenen Einführseiten der Einführöffnungen 15 im Vorsprung 10 geführt. Durch einen kurzen Ruck am Griffstück 8 nach oben rutscht der Schnurabschnitt 9 auf beiden Seiten durch die Einführöffnung 15 hindurch in die Führungsöffnungen 14 und wird aufgrund der Verengung der Einführöffnung 15 in der Führungsöffnung 14 verriegelt geführt. Die Montage des Tragegriffelementes 7 lässt sich damit schnell und einfach von Hand bewerkstelligen, ist aber auch leicht automatisierbar.

## Patentansprüche

1. Batteriekasten (2) mit einer Durchführungsöffnung an einem Flansch (6) des Batteriekastens (2) zur Aufnahme eines Tragegriffelementes (7), das einen länglichen Griffabschnitt (8) hat, der größer als die Durchführungsöffnung ist, und einen an die Enden des Griffabschnitts (8) angebrachten eine Schlaufe bildenden Schnurabschnitt (9) hat, **dadurch gekennzeichnet, dass** die Durchführungsöffnung ein sich in eine Längsrichtung erstreckendes Langloch (13) ist, durch das die Schlaufe des Schnurabschnitts (9) des Tragegriffelementes (7) durchführbar ist, und an dem Batteriekasten (2) unterhalb der Öffnung des Langlochs (13) im Bereich der Langlochenden jeweils ein Klemmverriegelungselement zur Aufnahme des Schnurabschnitts (9) angeordnet ist, wobei die Klemmverriegelungselemente jeweils eine Einführöffnung (15) haben, die in eine Führungsöffnung (14) für den Schnurabschnitt (9) mündet und gegenüberliegend der Führungsöffnung (14) eine zur Einführung des Schnurabschnitts (9) offene Einführseite und eine Verengung zur verriegelnden Aufnahme des Schnurabschnitts (9) in der angrenzenden Führungsöffnung (14) hat, und wobei die offene Einführseite in Längsrichtung parallel zum Langloch (13) gesehen vom Langloch (13) in Richtung des zugeordneten Langlochendes weist.

2. Batteriekasten (2) nach Anspruch 1, **dadurch gekennzeichnet, dass** die Verengung der Einführöffnung (15) fluchtend mit dem zugeordneten Langlochende ausgerichtet ist.

3. Batteriekasten (2) nach Anspruch 1 oder 2, **gekennzeichnet durch** einen integral mit dem Batteriekasten (2) geformten Vorsprung (10), der sich quer zur Aussenwand des Batteriekastens (2) und parallel in Längsrichtung des Flansches (6) erstreckt, wobei die Klemmverriegelungselemente jeweils in den schmalen an den Batteriekasten (2) angrenzenden Seiten des Vorsprungs (10) geformt sind.

4. Batteriekasten (2) nach Anspruch 3, **dadurch gekennzeichnet, dass** der Vorsprung (10) Verstärkungsrippen (11) quer zur Längsrichtung des Vorsprungs (10) hat, die integral mit dem Vorsprung (10) und dem Batteriekasten (2) verbunden sind.

5. Batteriekasten (2) nach Anspruch 3 oder 4, **gekennzeichnet durch** mindestens eine gegenüberliegend von der Behälterwand an der Unterseite des Vorsprungs (10) angeordnete Nase (12), die in die vom Flansch (6) zum Vorsprung (10) laufende Richtung nach unten weist.

## Claims

1. Battery box (2) having a through-opening on a flange (6) of the battery box (2) for holding a carrying handle element (7) which has a elongate handle section (8), which is larger than the through-opening, and has a cord section (9) which is attached to the ends of the handle section (8) and forms a loop, **characterized in that** the through-opening is an elongate hole (13) which extends in a longitudinal direction and through which the loop of the cord section (9) of the carrying handle element (7) can be passed, and a clamping lock element for holding the cord section (9) is arranged on the battery box (2) below the opening of the elongate hole (13) in the region of each of the ends of the elongate hole, with the clamping lock elements each having an insertion opening (15) which opens into a guide opening (14) for the cord section (9) and, opposite the guide opening (14), has an open insertion side for inserting the cord section (9) and a constriction for holding the cord section (9) in the adjacent guide opening (14) in a locking manner, and with the open insertion side pointing from the elongate hole (13) in the direction of the associated end of the elongate hole, as seen in the longitudinal direction parallel to the elongate hole (13).

2. Battery box (2) according to Claim 1, **characterized in that** the constriction of the insertion opening (15) is aligned with the associated end of the elongate hole.

3. Battery box (2) according to Claim 1 or 2, **characterized by** a protrusion (10) which is integrally formed with the battery box (2) and extends transverse to the outer wall of the battery box (2) and parallel in the longitudinal direction of the flange (6), with the clamping lock elements being formed in the narrow sides of the protrusion (10) which are each of adjacent to the battery box (2).

4. Battery box (2) according to Claim 3, **characterized in that** the protrusion (10) has reinforcing ribs (11) which are transverse to the longitudinal direction of the protrusion (10) and integrally connected to the protrusion (10) and the battery box (2).

5. Battery box (2) according to Claim 3 or 4, **characterized by** at least one lug (12) which is arranged opposite the container wall on the lower face of the protrusion (10) and points downwards in the direction running from the flange (6) to the protrusion (10).

## Revendications

1. Caisson de batterie (2) avec sur une bride (6) du caisson de batterie (2) une ouverture de passage pour loger un élément de poignée de transport (7) qui présente une partie de poignée (8) allongée plus grande que l'ouverture de passage et une partie de cordon (9) formant une boucle située aux extrémités de la partie de poignée (8),
**caractérisé en ce que**
l'ouverture de passage est un trou oblong (13) s'étendant dans une direction longitudinale, et par lequel on peut passer la boucle de la partie de cordon (9) de la poignée de transport (7), et sur le caisson de batterie (2) sous l'ouverture du trou oblong (13) dans la zone des extrémités de trou oblong chaque fois un élément de verrouillage par serrage peut loger la partie de cordon (9), les éléments de verrouillage par serrage présentant chacun une ouverture d'introduction (15) qui débouche dans une ouverture de guidage (14) pour la partie de cordon (9) et présente en face de l'ouverture de guidage (14) une face d'introduction ouverte pour introduire la partie de cordon (9) ainsi qu'un rétrécissement pour le logement verrouillé de la partie de cordon (9) dans l'ouverture de guidage (14) adjacente, et la face d'introduction ouverte s'étend depuis le trou oblong (13) en direction de l'extrémité de trou oblong associée, observé en direction longitudinale parallèle au trou oblong (13).

2. Caisson de batterie (2) selon la revendication 1,
**caractérisé en ce que**
le rétrécissement de l'ouverture d'introduction (15) est aligné à l'extrémité de trou oblong associée.

3. Caisson de batterie (2) selon la revendication 1 ou 2,
**caractérisé par**
une saillie (10) solidaire du Caisson de batterie (2), qui s'étend transversalement à la paroi extérieure du Caisson de batterie (2) et parallèlement à la direction longitudinale de la bride (6), les éléments de verrouillage par serrage étant respectivement formés dans les petits côtés de la saillie (10) adjacent au caisson de batterie (2).

4. Caisson de batterie (2) selon la revendication 3,
**caractérisé en ce que**
la saillie (10) présente des nervures de renforcement (11) transversales par rapport à sa direction longitudinale et intégralement reliées à la saillie (10) et au caisson de batterie (2).

5. Caisson de batterie (2) selon la revendication 3 ou 4,
**caractérisé par**
au moins un nez (12) disposé face à la paroi de caisson à la face inférieure de la saillie (10) et orienté dans la direction s'étendant de la bride (6) jusqu'à la saillie (10) vers le bas.
